# EUROPEAN PATENT APPLICATION

(11) **EP 1 462 334 A2**
(43) Date of publication of application: **29.09.2004**
(21) Application number: 04101168.5
(22) Date of filing: 22.03.2004
(51) Int. Cl.: B62B 7/08

(54) **Foldable pushchair**

(30) Priority: 28.03.2003 IT MI20030624
(71) Applicant: ARTSANA S.p.A., 22070 Grandate, (Como) (IT)
(72) Inventor: Catelli, Pietro, 22100 Como (IT)
(74) Representative: Ripamonti, Enrico, Dr. Ing.

(57) **Abstract**

A pushchair (1), perambulator or similar child transport means comprises a frame (2) having an umbrella-closable structure mounted on wheels (11, 20) and presenting sidepieces (3, 4) connected together by a transverse cross (26) positioned below a child support portion (28), each of said sidepieces (3, 4) comprising a pair (10) of tubular elements (5, 6) movable relative to each other and operationally connected to the front wheel (11), with one (5) of said tubular elements (5, 6) there being associated a handgrip for manipulating the transport means (1). The cross (26) comprises elastic means (33) to facilitate passage of the pushchair from a closed to an open position.

## Description

The present invention relates to a pushchair, perambulator or similar transport means, in accordance with the introduction to the main claim.

A child transport means, such as a pushchair, is known to comprise a frame having a closable structure. The present invention provides in particular such a means or pushchair which is closable in the manner of an umbrella.

Such a pushchair comprises sidepieces connected by a lowerly positioned cross to a pushchair portion able to support a child, said sidepieces being connected together by an articulated structure (for example a double quadrilateral) present to the rear of the frame.

The frame is mounted on single or paired wheels. The frame comprises a plurality of tubular elements defining the said sidepieces: a pair of such tubular elements, positioned at each sidepiece and slidably movable mutually when the pushchair is closed or opened, is operationally connected to at least one front wheel, a single tubular element, hinged to said pair, being connected to at least one rear wheel. A tubular element of said pair is also connected to a pushchair handgrip allowing its manipulation.

Various types of means for quickly opening the pushchair are known. These means comprise a spring usually positioned at the articulated structure to the rear of the frame; alternatively, helical or air springs are positioned at or within the tubular elements of the pair of elements on each side of the frame.

Although such arrangements enable the pushchair to be easily opened, they can be of complicated construction.

Moreover, as umbrella-closable pushchairs have large longitudinal dimensions (height) when folded, methods exist to reduce this height; such methods are often unsatisfactory in terms of their use or construction.

Finally, one of the elements of each pair of tubular elements positioned on the pushchair sides is usually associated with the front wheel by having one of its ends bent. This method, which requires the tubular element to be bent, is of considerable cost and restricts the pushchair appearance.

An object of the present invention is to provide a child transport means such as a pushchair, a perambulator or the like, comprising an umbrella-closable frame, which represents an improvement on equivalent known means.

A particular object of the invention is to provide a child transport means of the stated type which is of simplified opening.

Another object is to provide a child transport means of the stated type which can be easily reduced in height when folded.

A further object of the invention is to provide a child transport means which can have an appearance which is not limited by the connection between the frame and its front wheels.

These and further objects which will be apparent to the expert of the art are attained by a child transport means in accordance with the accompanying claims.

The present invention will be more apparent from the accompanying drawing, which is provided by way of nonlimiting example and in which:
Figure 1 is a side perspective view of a pushchair in its open position, according to the invention;
Figure 2 is a view of the pushchair of Figure 1 from above;
Figure 3 is a view of a part of the pushchair of Figure 1 from above;

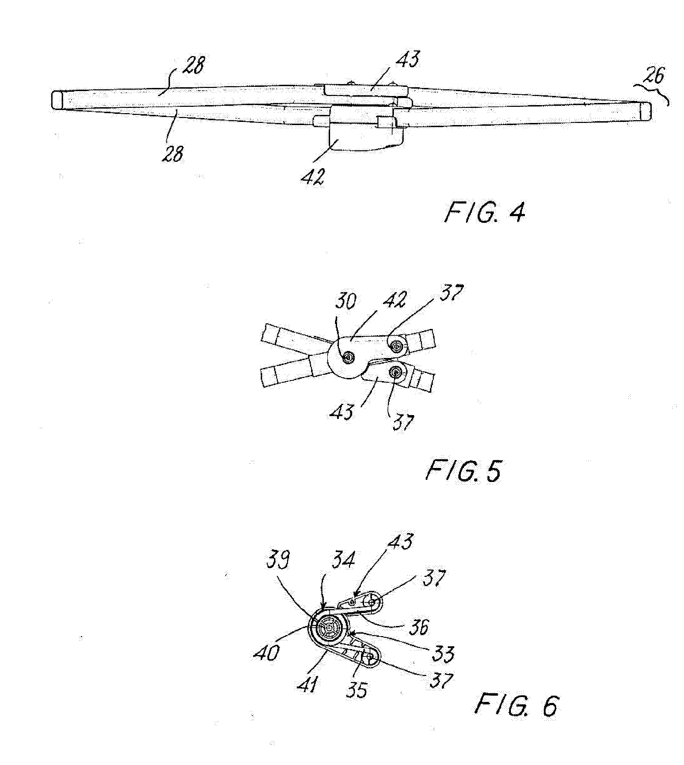

Figure 4 is a side view of the part of Figure 3;
Figure 5 is a view from below showing a portion of the part of Figure 3 when in its closed position;

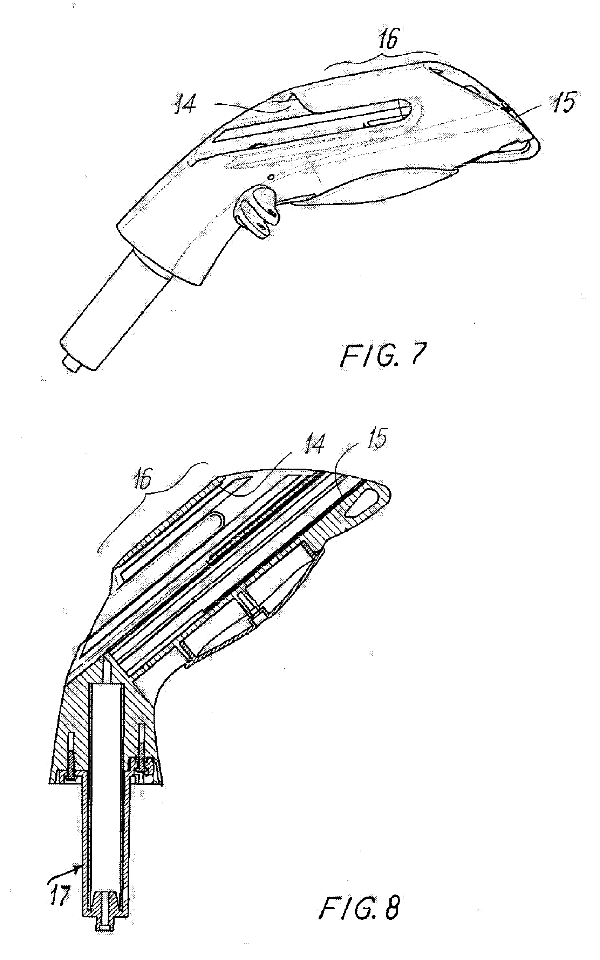

Figure 6 is a cross-section through the portion of Figure 5 when the part of Figure 3 is in the open position of that figure;
Figure 7 is a perspective view of a front part of the pushchair of Figure 1;

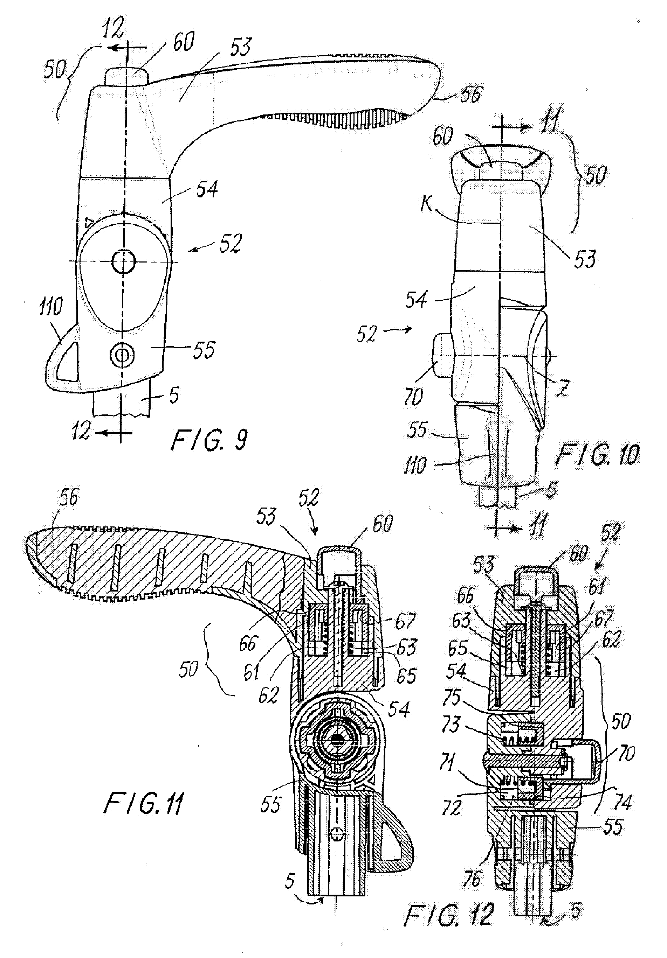

Figure 8 is a cross-section through the front part of Figure 7;
Figure 9 is a side view of a handgrip of the pushchair of Figure 1;
Figure 10 is a rear view of the handgrip of Figure 9;
Figure 11 is a section on the line 11-11 of Figure 10; and
Figure 12 is a section on the line 12-12 of Figure 9.

With reference to said figures, a pushchair of the umbrella-closable type is indicated overall by 1 and comprises a frame 2 having a structure comprising sidepieces 3 and 4; each sidepiece is defined by a plurality of tubular elements 5, 6 and 7.

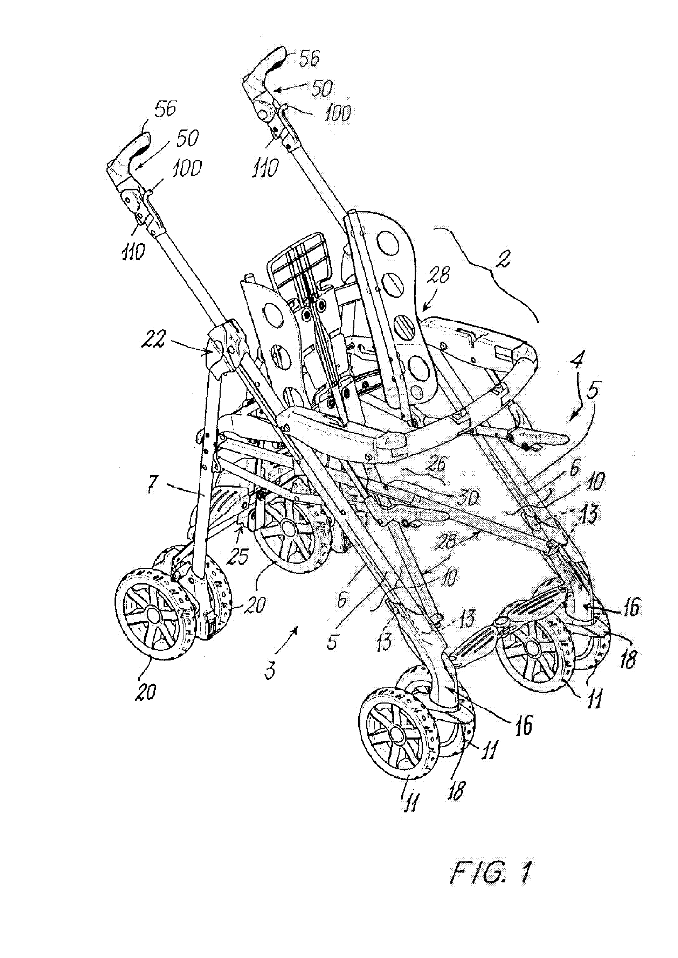

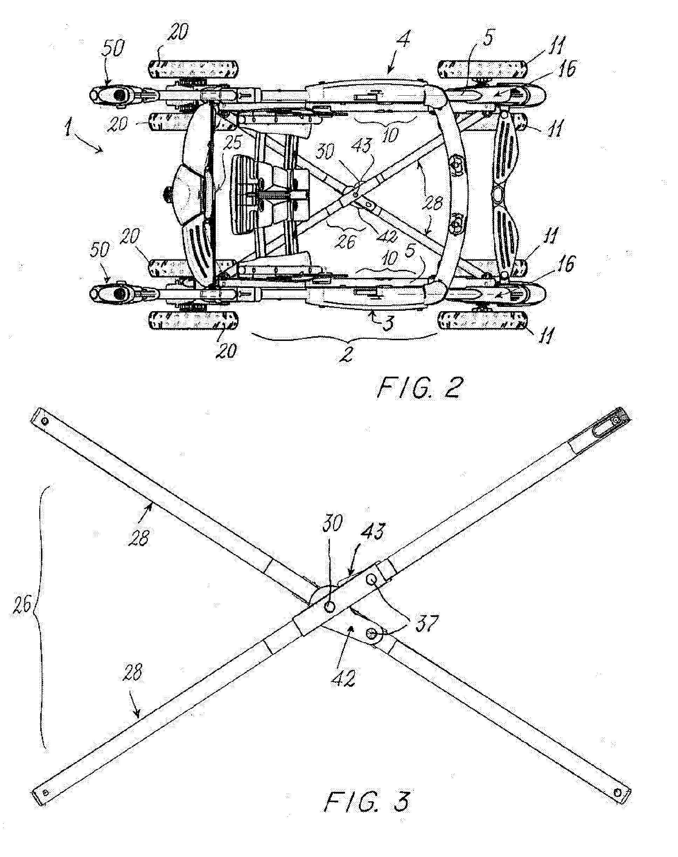

Specifically, the elements 5 and 6 define an element pair 10 provided on each sidepiece 3 and 4 of the frame; they lie parallel to each other at least when the pushchair is in its (open) utilization position (shown in that position in Figures 1 and 2), and are locked relative to each other by usual releasable locking means (not shown). The tubular elements 5 and 6 move mutually, for example parallel to each other, while closing the pushchair. This element pair 10 cooperates operationally with a pair of twinned wheels 11 positioned to the front of the frame 1. The elements 5 and 6 of each pair 10 are rectilinear and terminate with ends 13 inserted into seats 14 and 15 respectively, in a member 16 presenting a projecting tube 17 cooperating with a support 18, for example pivotal, for the wheels 11. The member 16, of bent shape, is hence separate from the tubular elements 5 and 6, which are totally of rectilinear axis; this avoids the need to bend one of the elements 5, 6 (as in known arrangements) for connecting it to the support 18 for the wheels 11. Moreover, as the member 16 is separate from the elements 5, 6, it can be obtained with materials , shapes and colours different from those of said elements, so enabling a special appearance to be achieved which is not dependent on these latter.

The other tubular element, positioned to the rear of the frame 2 and indicated by 7 in Figures 1 and 2, supports the rear wheels 20 of the pushchair and is hinged to a node 22 on the pair 10 of tubular elements.

The sidepieces 3 and 4 of the frame 2 are connected together by an articulated structure 25, for example of double quadrilateral type, present at the rear of the pushchair 1 (with reference to the travel direction thereof) and by a cross 26 positioned below a child support portion 28 of the pushchair. This portion supports in known manner a frame or similar foldable element (not shown) on which the child is placed during transport.

The cross 26 comprises two rods 28 hinged together at 30 substantially in a central region thereof. These rods 28 are hinged at their opposing ends to the rear tubular elements 7 and to the (front) members 16 to which the front wheels 11 are connected.

At the hinge 30, an elastic element 33 is present to urge the rods 28 apart when the pushchair is to be opened. The elastic element 33 comprises a helical spring 34 with end arms 35 and 36 associated with pins 37 fixed to the rods 30 of the cross, the spring 34 having a main spiral shaped portion 29 wound about a circular piece 40 of a part 41 (through which a pin defining the hinge 30 passes) of a box element 42 covering the portion 39 and said first end arm 35. Another box element 43 contains the second end arm 36.

By virtue of this arrangement, a small-dimension spring positioned within the hinge 30 of the cross 26 enables the previously closed pushchair to be easily opened. This spring can be helical, but could also be spiral or of another type. Alternatively, another elastic element (for example an air spring) can be positioned between the rods 28, to urge them apart while opening the pushchair.

One of the rectilinear elements 5, 6 of the element pair 10 present on each sidepiece 3, 4 of the frame 2, for example the element 5, supports a handgrip 50 for manipulating the pushchair 1. This handgrip comprises an articulated body 52 presenting three portions 53, 54 and 55 movable relative to each other.

The first portion 53 presents a projection or gripping part 56 and is movable relative to an intermediate second portion 54 about an axis K perpendicular to an axis Z (perpendicular to the longitudinal axis of the element 5 coinciding substantially with the axis K) about which the second portion can rotate and move relative to the third portion, which is rigid with the tubular element 5.

The first portion 53 supports a pushbutton 60 having a socket part 61 movable within a seat 62 of the second portion 54 against a spring 63 positioned therein. The walls of the seat 62 present projections 65 with which the part 61 cooperates; when this latter is in its rest position it rests against one end 66 of a cavity 67 of the first portion 53. When in this position it projects into the seat 62 and by cooperating with the projections 65 it blocks rotation of the first portion 53 about the axis K. By pressing the pushbutton 60, the part 61 completely enters the seat 62 allowing the first portion 53 to be rotated about the axis K. This enables the handgrip to be better used by being able to modify its spatial attitude, for example to facilitate its loading into a motor vehicle.

Another pushbutton 70 associated with the second portion 54 is movable along the axis Z. With this pushbutton there is associated a socket part 71, movable within a seat 72 provided in the third portion 55 against a spring 73. When at rest, the part 71 lies in a cavity 74 of the second portion 54 and rests against one end 75 thereof. On its walls the seat 72 comprises projections 76 with which the part 71 cooperates to prevent rotation of the third part 55 about the axis Z when the part 71 lies in the cavity 74. By pressing the pushbutton 70, the part 71 is moved into the seat 72, the second part 54 of the handgrip then being able to be rotated relative to the third part 55.

Again in this case, rotating the part 54 relative to the part 55 enables the longitudinal dimensions or height of the pushchair to be reduced when closed.

With each handgrip there is also associated a member 100 for releasing the constraint between the elements 5 and 6 of the element pair 10 positioned on the same side 3 or 4 of the frame 2 as said member, when the pushchair is to be closed or opened; a hook 110 for supporting a bag or the like is also associated with this handgrip.

## Claims

1. A pushchair (1), perambulator or similar child transport means, comprising a frame (2) having an umbrella-closable structure mounted on wheels (11, 20) and presenting sidepieces (3, 4) connected together by a transverse cross (26) positioned below a child support portion (28), each of said sidepieces (3, 4) comprising a pair (10) of tubular elements (5, 6) movable relative to each other and operationally connected to the front wheel (11), with one (5) of said tubular elements (5, 6) there being associated a handgrip for manipulating the transport means (1), **characterised in that** the cross (26) comprises elastic means (33) to facilitate passage of the pushchair from a closed to an open position.

2. A pushchair, perambulator or similar transport means as claimed in claim 1, **characterised in that** the elastic means (33) are a helical spring (34).

3. A pushchair, perambulator or similar transport means as claimed in claim 2, **characterised in that** the helical spring (34) comprises end arms (35, 36) connected to rods (28) of the cross (26) and a spiral shaped portion (39) positioned at a hinge (30) of said cross (26).

4. A pushchair, perambulator or similar transport means as claimed in claim 1, **characterised in that** the elastic means (33) are a spiral spring.

5. A pushchair, perambulator or similar transport means as claimed in claim 1, **characterised in that** the elastic means (33) are an air spring.

6. A pushchair, perambulator or similar transport means as claimed in claim 1, **characterised in that** the elastic means (33) are positioned within a casing (42, 43) associated with the cross.

7. A pushchair, perambulator or similar transport means as claimed in claim 6, **characterised in that** the casing comprises two portions (42, 43) each associated with a rod (28) of the cross (26).

8. A pushchair, perambulator or similar transport means as claimed in claim 1, **characterised in that** each pair (10) of tubular elements (5, 6) cooperates with a member (16) which supports the corresponding front wheel (11).

9. A pushchair, perambulator or similar transport means as claimed in claim 8, **characterised in that** said member (16) is bent whereas the tubular elements (5, 6) are rectilinear.

10. A pushchair, perambulator or similar transport means as claimed in claim 1, **characterised in that** the handgrip (50) comprises at least a first and a second part (54, 55) movable relative to each other about an axis (Z) perpendicular to the longitudinal axis of the tubular element (5) with which said handgrip is associated.

11. A pushchair, perambulator or similar transport means as claimed in claim 10, **characterised by** comprising a member (70) enabling the relative movement of said first and second part (54, 55) of the handgrip (50).

12. A pushchair, perambulator or similar transport means as claimed in claim 10, **characterised in that** the enabling member is a pushbutton (70) cooperating with an element (71) movable within cavities (72, 74) communicating with said two parts (54, 55) of the handgrip (50) against the action of a spring (73), said movable element (71) cooperating with projections (76) provided in one (72) of said cavities (72, 74) into which said element penetrates totally in order to enable the relative movement of said first and second part (54, 55|) of the handgrip (50).

13. A pushchair, perambulator or similar transport means as claimed in claim 10, **characterised in that** the handgrip comprises a third part (52) movable relative to the first part (54) of the handgrip about an axis (K) perpendicular to the axis (Z) about which said first and second part (54, 55) of the handgrip move relative to each other, enabling means (60, 61) being provided to enable or prevent said movement of the third part (53) relative to the first (54).

14. A pushchair, perambulator or similar transport means as claimed in claim 13, **characterised in that** said third part is positioned at the free end of the handgrip (50) and comprises a gripping part (56).
